# EUROPÄISCHE PATENTANMELDUNG

(11) **EP 3 219 970 A1**
(43) Veröffentlichungstag der Anmeldung: **20.09.2017**
(21) Anmeldenummer: 16160827.8
(22) Anmeldetag: 17.03.2016
(51) Int. Cl.: F02F 1/04, F02F 1/10, F02B 61/04

(54) **ZYLINDER FÜR EINEN LÄNGSGESPÜLTEN ZWEITAKT-GROSSDIESELMOTOR SOWIE GROSSDIESELMOTOR**

(71) Anmelder: Winterthur Gas & Diesel AG, 8401 Winterthur (CH)
(72) Erfinder: Räss, Konrad, 8457 Humlikon (CH)
(74) Vertreter: Intellectual Property Services GmbH

(57) **Zusammenfassung**

Es wird ein Zylinder für einen längsgespülten Zweitakt-Grossdieselmotor vorgeschlagen, mit einem Kolben (3), der zwischen einem unteren und einem oberen Umkehrpunkt hin- und herbewegbar angeordnet ist, wobei der Kolben (3) zumindest einen obersten Kolbenring (31) aufweist, mit einem Zylinderliner (4) zur Führung des Kolbens (3), wobei der Zylinderliner (4) eine Lauffläche (41) aufweist, entlang welcher der oberste Kolbenring (3) des Kolbens im Betriebszustand gleitet, sowie mit einem Zylinderdeckel (5), wobei der Zylinderdeckel (5) und der Kolben (3) einen Brennraum (6) für einen Brennstoff begrenzen, und wobei der Zylinderliner (4) unterhalb einer oberen Umkehrposition (O) des obersten Kolbenrings frei von Kühlmittelbohrungen ist. Ferner wird ein Grossdieselmotor vorgeschlagen.

## Beschreibung

Die Erfindung betrifft einen Zylinder für einen längsgespülten ZweitaktGrossdieselmotor sowie einen Zweitakt-Grossdieselmotor gemäss dem Oberbegriff des unabhängigen Patentanspruchs der jeweiligen Kategorie.

Längsgespülte Zweitakt-Grossdieselmotoren werden häufig als Antriebsaggregate für Schiffe oder auch im stationären Betreib, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien.

Seit einigen Jahren ist auch mit zunehmender Bedeutung die Qualität der Abgase, insbesondere die Stickoxid Konzentration in den Abgasen ein wesentlicher Aspekt. Hier werden die rechtlichen Vorgaben und Grenzwerte für die entsprechenden Abgasgrenzwerte immer weiter verschärft. Das hat insbesondere bei Zweitakt-Grossdieselmotoren zur Folge, dass die Verbrennung des klassischen, mit Schadstoffen hoch belasteten Schweröls, aber auch die Verbrennung von Dieselöl oder anderen Brennstoffen problematischer wird, weil die Einhaltung der Abgasgrenzwerte immer schwieriger, technisch aufwändiger und damit teurer wird oder am Ende deren Einhaltung gar nicht mehr sinnvoll möglich ist.

In der Praxis besteht daher bereits seit langem das Bedürfnis nach sogenannten "Dual-Fuel Motoren", also Motoren, die mit zwei unterschiedlichen Brennstoffen betrieben werden können. In einem Gasmodus wird ein Gas, z.B. ein Erdgases wie LNG (liquefied natural gas), oder ein Gas in Form eines Autogases oder eines anderen zum Antrieb einer Brennkraftmaschine geeigneten Gases verbrannt, während in einem Flüssigmodus ein geeigneter flüssiger Brennstoff wie Diesel oder Schweröl in demselben Motor verbrannt werden können.

Mit dem Begriff "Grossdieselmotor" sind im Rahmen dieser Anmeldung auch solche Grossmotoren gemeint, die ausser im Dieselbetrieb, der durch die Selbstzündung des Brennstoffs gekennzeichnet ist, auch in einem Ottobetrieb, der durch die Fremdzündung des Brennstoffs gekennzeichnet ist, oder in Mischformen aus diesen beiden betrieben werden kann. Ferner umfasst der Begriff Grossdieselmotor insbesondere auch die genannten DualFuel-Motoren und solche Grossmotoren, bei denen die Selbstzündung des Brennstoffs zur Fremdzündung eines anderen Brennstoffs genutzt wird.

Im Flüssigmodus wird üblicherweise der Brennstoff direkt in den Brennraum des Zylinders eingebracht und verbrennt dort nach dem Prinzip der Selbstzündung. Im Gasmodus ist es bekannt, nach dem Otto-Prinzip das Gas im gasförmigen Zustand mit der Spülluft zu vermischen, um so im Brennraum des Zylinders ein zündfähiges Gemisch zu erzeugen. Bei diesem Niederdruckverfahren erfolgt die Zündung des Gemisches im Zylinder üblicherweise, indem im richtigen Moment eine kleine Menge flüssiger Brennstoff in den Brennraum des Zylinders oder in eine Vorkammer eingespritzt wird, die dann zur Zündung des Luft-Gas-Gemisches führt. Ein Dual-Fuel Motor kann während des Betriebs vom Gasmodus in den Flüssigmodus umgeschaltet werden und umgekehrt.

Ein längsgespülter Zweitakt-Grossdieselmotor umfasst mindestens einen, üblicherweise aber mehrere Zylinder, wobei in jedem Zylinder ein Kolben vorgesehen ist, der zwischen einem unteren und einem oberen Umkehrpunkt hin- und herbewegbar angeordnet ist, wobei der Kolben zumindest einen obersten Kolbenring aufweist, häufig aber auch eine Mehrzahl von Kolbenringen. Ferner weist der Zylinder einen Zylinderliner zur Führung des Kolbens auf, wobei die innenliegende Begrenzungsfläche des Zylinderliners eine Lauffläche bildet, entlang welcher der oder die Kolbenring(e) des Kolbens im Betriebszustand gleitet bzw. gleiten, Ferner ist ein Zylinderdeckel vorgesehen, welcher zusammen mit der oberen Begrenzungsfläche des Kolbens einen Brennraum für einen Brennstoff begrenzt. Während des Betriebs des Grossdieselmotors im Dieselbetrieb wird dann, wenn der Kolben sich im Bereich seines oberen Umkehr- oder Totpunkts befindet, der Brennstoff in den Brennraum eingespritzt, entzündet sich und verursacht so die Abwärtsbewegung des Kolbens. Bei längsgespülten ZweitaktGrossdieselmotoren ist im Zylinderdeckel ferner ein Auslassventil vorgesehen, welches nach der Verbrennung des Brennstoffs bei der Abwärtsbewegung des Kolbens geöffnet wird. Wenn sich der Kolben dem unteren Umkehr- oder Totpunkt nähert, passiert er Spülluftschlitze die üblicherweise im unteren Bereich des Zylinders vorgesehen sind, und ermöglicht dadurch das Einströmen von Spülluft, die auch als Ladeluft bezeichnet wird, in den Brennraum. Bei der anschliessenden Aufwärtsbewegung verschliesst der Kolben wieder die Strömungsverbindung zwischen den Spülluftschlitzen und dem Brennraum, das Auslassventil wird geschlossen und dann bei weiterer Aufwärtsbewegung des Kolbens die im Zylinder befindliche Spülluft komprimiert, bis im Bereich des oberen Umkehrpunkts des Kolbens die nächste Einspritzung des flüssigen Brennstoffs erfolgt.

Für einen möglichst effizienten, schadstoffarmen und wirtschaftlichen Betrieb des Grossdieselmotors ist es wesentlich, dass das tribologische System mit der Lauffläche des Zylinderliners, den Kolbenringen und einem geeigneten Schmiermittel möglichst optimal eingestellt ist. Aufgrund der hohen Temperaturen, die bei dem Verbrennungsprozess entstehen, wird der Zylinderliner üblicherweise gekühlt, um thermisch bedingte Schädigungen der Lauffläche bzw. des Zylinderliners, wie beispielsweise Risse im Gefüge, zu vermeiden. Dazu ist es bekannt, dass der Zylinderliner mit einem flüssigen Kühlmedium, in der Regel Wasser, gekühlt wird, um die Wärme aus dem Zylinderliner abzuführen. Das Kühlmittel wird dabei mittels Pumpen durch Kühlmittelbohrungen im Zylinderliner oder durch Kühlmittelleitungen zirkuliert, um der Lauffläche Wärme zu entziehen.

Gerade bei Verwendung von Schweröl als flüssigem Brennstoff ist der Zylinderliner und insbesondere seine Lauffläche häufig Angriffen von chemisch aggressiven Substanzen ausgesetzt, die bei der Verbrennung des Schweröls entstehen. Als ein Beispiel seien hier Schwefelverbindungen genannt, welche bei der Verbrennung schwefelhaltiger Brennstoffe entstehen. Je nach Temperatur der Lauffläche kommt es nämlich zur Ausbildung von schwefeliger Säure oder von Schwefelsäure, die sich auf der Lauffläche niederschlagen können und diese angreifen.

Daher ist man bemüht, zur Vermeidung oder zur Reduzierung solcher Säureangriffe durch eine geeignete Kühlung die Temperatur der Lauffläche mithilfe des Kühlmediums so einzustellen, dass sie oberhalb des Taupunkts von Wasser oder z.B. Schwefelsäure bleibt. Denn die Kondensation von Wasser oder schwefliger Säure oder anderer aggressiver Substanzen ist als der Mechanismus bekannt, welcher die Lauffläche angreift und am meisten gefährdet.

Diese Einstellung der Laufflächentemperatur ist aber mit einigen Schwierigkeiten verbunden. Der grösste Wärmeeintrag in die Lauffläche erfolgt natürlich in dem Bereich der Lauffläche, welche dem Brennraum am nächsten ist. Dies ist insbesondere auch der Bereich, der sich benachbart unterhalb der Umkehrposition des obersten Kolbenrings befindet, denn dieser Bereich kommt bei der Abwärtsbewegung des Kolbens mit den noch sehr heissen und noch unter hohem Druck stehenden Verbrennungsgasen in Kontakt, sodass hier üblicherweise eine Wasserkühlung vorgesehen ist, um eine Überhitzung des Zylinderliners zu vermeiden. Im weiter unten liegenden Bereich des Zylinderliners darf hingegen nicht zu stark gekühlt werden, damit der Taupunkt des Wassers möglichst nicht unterschritten wird.

Es sind daher recht komplexe Kühlsysteme für Zylinderliner in ZweitaktGrossdieselmotoren entwickelt worden, die auf einer Kombination von Wasser- und Luftkühlung basieren, um so einerseits eine ausreichende Kühlwirkung im oberen Bereich des Zylinderliners zu gewährleisten und um andererseits die Temperatur der Lauffläche über dem Taupunkt von Wasser bzw. anderen Fluiden wie Säuren zu halten. Neben ihrer Komplexität weisen diese bekannten Systeme weitere Nachteile auf. Wenn beispielsweise der Grossdieselmotor in einem unteren Teillastbereich betrieben wird, z.B. bei 10% seiner Volllastleistung, so ist die durch den Verbrennungsprozess in die Lauffläche eingetragene Wärmeleistung so gering, dass das Kühlwasser sogar noch aufgeheizt werden muss, um die Lauffläche auf einer Temperatur zu halten, die oberhalb des Taupunkts von Wasser liegt. Dies bedeutet zusätzlichen apparativen Aufwand und zusätzlichen Energiebedarf.

Ausgehend von diesem Stand der Technik ist es daher eine Aufgabe der Erfindung, einen Zylinder für einen längsgespülten Zweitakt-Grossdieselmotor vorzuschlagen, bei welchem eine apparativ möglichst wenig aufwändige Kühlung der Lauffläche des Zylinderliners vorgesehen ist, ohne dass dafür Zugeständnisse an den Schutz gegenüber Angriffen aggressiver Substanzen vonnöten sind. Ferner ist es eine Aufgabe der Erfindung, einen entsprechenden Grossdieselmotor vorzuschlagen.

Die diese Aufgabe lösenden Gegenstände der Erfindung sind durch die Merkmale des unabhängigen Patentanspruchs der jeweiligen Kategorie gekennzeichnet.

Erfindungsgemäss wird also ein Zylinder für einen längsgespülten ZweitaktGrossdieselmotor vorgeschlagen, mit einem Kolben, der zwischen einem unteren und einem oberen Umkehrpunkt hin- und herbewegbar angeordnet ist, wobei der Kolben zumindest einen obersten Kolbenring aufweist, mit einem Zylinderliner zur Führung des Kolbens, wobei der Zylinderliner eine Lauffläche aufweist, entlang welcher der oberste Kolbenring des Kolbens im Betriebszustand gleitet, sowie mit einem Zylinderdeckel, wobei der Zylinderdeckel und der Kolben einen Brennraum für einen Brennstoff begrenzen, und wobei der Zylinderliner unterhalb einer oberen Umkehrposition des obersten Kolbenrings frei von Kühlmittelbohrungen ist.

Wesentlich ist die Erkenntnis, dass es möglich ist, in einem längsgespülten Zweitakt-Grossdieselmotor einen Zylinder vorzusehen, bei welchem der Zylinderliner unterhalb der oberen Umkehrposition des obersten Kolbenrings frei von Kühlmittelbohrungen für ein flüssiges Kühlmedium wie beispielsweise Wasser ist, ohne dass es dabei zu thermisch bedingten Schädigungen im Zylinderliner kommt.

Mit der Umkehrposition des obersten Kolbenrings ist dabei die Position im Zylinderliner gemeint, an welcher sich die Oberkante, also die dem Brennraum nächstgelegene Kante, des obersten Kolbenrings befindet, wenn der Kolben sich im oberen Umkehrpunkt seiner Bewegung befindet.

Da unterhalb dieser Umkehrposition des obersten Kolbenrings im Zylinderliner keine Bohrungen oder äquivalente Mittel für die Führung eines flüssigen Kühlmittels vorgesehen sind, resultiert eine deutlich einfachere Konstruktion und ein erheblich einfacheres Design des Zylinderliners. Zudem kann auf zusätzliche Pumpvorrichtungen oder auch Temperierungsvorrichtungen verzichtet werden, welche notwendig wären, um ein flüssiges Kühlmittel durch diesen Bereich des Zylinderliners zu zirkulieren oder zu temperieren. Dadurch können die Kosten für den Zylinderliner und die Energiekosten sowie der apparative Aufwand gesenkt werden, wodurch sich ein wirtschaftlicher und weniger energieverbrauchender Betrieb des Grossdieselmotors ergibt.

Vorzugsweise ist der Zylinderliner unterhalb der oberen Umkehrposition des obersten Kolbenrings nur durch den Zylinderliner umgebende Luft kühlbar bzw. gekühlt. Es sind also insbesondere auch keine Kühlmäntel oder sonstige für die Kühlung bekannten Massnahmen notwendig. Der Zylinderliner ist somit unterhalb der Umkehrposition des obersten Kolbenrings nur dadurch gekühlt, dass er Strahlungswärme an die ihn umgebende Luft abgibt.

Gemäss einem bevorzugten Ausführungsbeispiel ist der Zylinderliner des Zylinders so ausgestaltet, dass der Zylinderliner bezüglich einer durch die Zylinderachse festgelegten axialen Richtung unterhalb des Brennraums endet. Hierdurch wird die Ausgestaltung des Zylinderliners besonders einfach.

Dabei ist es bevorzugt, wenn sich der Zylinderliner bezüglich der axialen Richtung bis an ein oberes Ende erstreckt, wobei das obere Ende bezüglich der axialen Richtung mit der oberen Umkehrposition des obersten Kolbenrings übereinstimmt. Somit endet der Zylinderliner bezüglich der axialen Richtung gerade dort, wo die obere Umkehrposition des obersten Kolbenrings ist. Der Zylinderliner kann dann besonders einfach ausgestaltet werden und dient nur noch der Führung des Kolbens, aber nicht mehr der Begrenzung des Brennraums. Dadurch kann der gesamte Zylinderliner in einfacher Weise frei von Kühlmittelbohrungen oder anderen Massnahmen für Kühlungen, wie beispielsweise einen Kühlmantel ausgebildet werden.

Bei einem anderen Ausführungsbeispiel weist der Zylinderliner einen Kragenbereich auf. Bei diesem Ausführungsbeispiel erstreckt sich der Zylinderliner bezüglich der axialen Richtung also über die obere Umkehrposition des obersten Kolbenrings heraus. Dabei ist es möglich, dass sich der Kragenbereich so weit nach oben erstreckt, dass er eine Begrenzung des Brennraums bildet, wenn dieser minimales Volumen hat, der Kolben also in seinem oberen Umkehrpunkt ist. Dabei ist dieser Kragenbereich üblicherweise mit einer grösseren Wandstärke ausgebildet als der Rest des Zylinderliners, damit er insbesondere auch dem im Brennraum herrschenden Druck standhalten kann. Auch bei diesem Ausführungsbeispiel ist der Zylinderliner in dem Bereich unterhalb der oberen Umkehrposition des obersten Kolbenrings nur durch die ihn umgebende Luft gekühlt, wobei im Kragenbereich zusätzliche Kühlmassnahmen, insbesondere eine Kühlung durch ein flüssiges Kühlmedium wie Wasser vorgesehen sein können.

Der Zylinderliner ist üblicherweise aus einem Grauguss hergestellt. Damit die thermische Belastbarkeit des Zylinderliners in den dem Brennraum am nächsten liegenden Bereichen nicht überschritten wird, kann es für manche Anwendungen vorteilhaft sein, wenn zwischen dem oberen Ende des Zylinderliners und dem Zylinderdeckel ein rohrförmiges Zwischenstück vorgesehen ist, welches aus einem anderen Material gefertigt ist als der Zylinderliner. Dieses Material wird dann in erster Linie nach dem Kriterium ausgewählt, dass es hohen Temperaturen ohne wesentliche Degradationseffekte standhalten kann.

Eine bevorzugte Massnahme besteht darin, dass der oberste Kolbenring bezüglich der axialen Richtung derart angeordnet ist, dass seine obere Umkehrposition in einem Bereich des Zylinderliners liegt, deren Betriebstemperatur in einem vorgebbaren Temperaturbereich liegt, welcher vorzugsweise 250°C bis 350°C beträgt. Die Position des obersten Kolbenrings braucht dann nicht mehr in Prozenten oder im Verhältnis zum Hub des Kolbens festgelegt zu werden, sondern anhand der Betriebstemperatur der Lauffläche des Zylinderliners, wobei mit der Betriebstemperatur diejenige gemeint ist, welche die Lauffläche des Zylinderliners beim Volllastbetrieb des Grossdieselmotors erreicht. Diese Massnahme ermöglicht eine deutlich flexiblere Gestaltung des Kolbens, insbesondere seiner Höhe in axialer Richtung.

Um die bei der Verbrennung des Brennstoffs in dem Brennraum entstehende Wärme möglichst gut aus dem Zylinder abzuführen, ist es eine vorteilhafte Massnahme, wenn oberhalb der oberen Umkehrposition des obersten Kolbenrings Kühlmittelleitungen für ein fluides Kühlmedium vorgesehen sind.

Dabei ist es besonders bevorzugt, wenn oberhalb der oberen Umkehrposition des obersten Kolbenrings Kühlmittelleitungen für ein flüssiges Kühlmedium, vorzugsweise Wasser, vorgesehen sind. Bei dieser Ausgestaltung umfasst das Kühlsystem also zwei unterschiedliche Abschnitte, nämlich den Bereich, der bezüglich der axialen Richtung unterhalb der oberen Umkehrposition des obersten Kolbenrings liegt, und in welchem eine reine Luftkühlung vorgesehen ist, und den Bereich oberhalb der oberen Umkehrposition des obersten Kolbenrings, in welchem zusätzlich eine Kühlung durch ein flüssiges Medium, insbesondere durch Wasser, vorgesehen ist.

Für die Kühlung im Bereich oberhalb der oberen Umkehrposition des obersten Kolbenrings ist es bevorzugt, dass die Kühlmittelleitungen Kühlmittelbohrungen umfassen, welche im Zylinderdeckel oder im Zylinderliner vorgesehen sind.

Durch die Erfindung wird ferner ein längsgespülter Zweitakt-Grossdieselmotor vorgeschlagen, mit einem Zylinder, der erfindungsgemäss ausgestaltet ist.

Je nach Anwendungsfall kann es vorteilhaft sein, wenn in dem Grossdieselmotor ein Gebläse vorgesehen ist, mit welchem dem Zylinderliner im Bereich der oberen Umkehrposition des obersten Kolbenrings Kühlluft zuführbar ist. Dies kann entweder ein separates Gebläse sein oder es ist auch möglich, dass diese Kühlluft von einem Gebläse gefördert wird, welches bereits in dem Grossdieselmotor vorgesehen ist, beispielsweise ein solches Gebläse, mit welchenm Frischluft in den Motorenraum eingebracht wird, um zu vermeiden, dass es durch die von den Turboladern angesaugte Luft zum Ausbilden eines Unterdrucks im Motorenraum kommt.

Falls solche bereits vorhandenen Gebläse einen Kühlluftstrom generieren, welcher den Zylinderliner zu stark abkühlen würde, so dass beispielsweise der Taupunkt von Wasser unterschritten würde, kann es vorteilhaft sein, wenn eine Abschirmung vorgesehen ist, mit welcher der Zylinderliner gegen Luftströmungen abschirmbar ist.

Auch kann es vorteilhaft sein, wenn der Zylinderliner zumindest teilweise von einem rohrförmigen Element umgeben ist, in welches Kühlluft einbringbar ist. Dieses rohrförmige Element kann beispielsweise in Strömungsverbindung mit einem Gebläse stehen, sodass die Kühlluft gezielt in die Bereiche geführt wird, die einer Kühlung bedürfen.

Der erfindungsgemässe Grossdieselmotor kann insbesondere auch als Dual-Fuel Motor zur Verbrennung eines Gases und zur Verbrennung eines flüssigen Brennstoffs, insbesondere Diesel oder Schweröl, ausgestaltet sein.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:
- Fig. 1:: einen Längsschnitt durch ein Ausführungsbeispiel eines erfindungsgemässen Zweitakt-Grossdieselmotor mit einem ersten Ausführungsbeispiel eines erfindungsgemässen Zylinders,
- Fig. 2:: einen Längsschnitt durch den oberen Bereich einer Variante des ersten Ausführungsbeispiels des erfindungsgemässen Zylinders,
- Fig. 3:: einen Längsschnitt durch ein zweites Ausführungsbeispiel eines erfindungsgemässen Zylinders,
- Fig. 4:: einen Längsschnitt durch ein drittes Ausführungsbeispiel eines erfindungsgemässen Zylinders, und
- Fig. 5:: einen Querschnitt senkrecht zur axialen Richtung durch den oberen Bereich einer Variante für die Ausgestaltung eines erfindungsgemässen Zylinders.

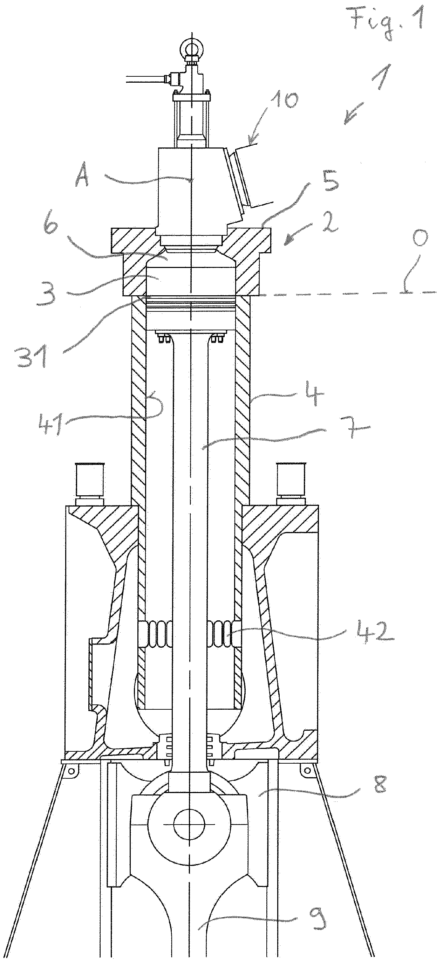

Fig. 1 zeigt einen Längsschnitt durch ein Ausführungsbeispiel eines erfindungsgemässen längsgespülten Zweitakt-Grossdieselmotors, der gesamthaft mit dem Bezugszeichen 1 bezeichnet ist, und der ein erstes Ausführungsbeispiel eines erfindungsgemässen Zylinders 2 umfasst. Dabei sind in Fig. 1 nur für das Verständnis der Erfindung wesentliche Komponenten gezeigt. Der prinzipielle Aufbau und die einzelnen Komponenten des Grossdieselmotors 1, wie beispielsweise das Einspritzsystem für den flüssigen Brennstoff, das Gaswechselsystem, das Abgassystem oder das Turboladersystem für die Bereitstellung der Spül- bzw. Ladeluft, sowie die Kontroll- und Steuerungssysteme für einen Grossdieselmotor sind dem Fachmann hinlänglich bekannt und bedürfen daher hier keiner weiteren Erläuterung. Auf die Darstellung solcher Komponenten ist in Fig. 1 aus Gründen der besseren Übersichtlichkeit verzichtet.

Der Grossdieselmotor 1 umfasst mindestens einen, typischerweise aber eine Mehrzahl von Zylindern 2, von denen in Fig. 1 nur einer im Längsschnitt dargestellt ist. Der Zylinder 2 hat eine Zylinderachse, welche eine Richtung festlegt, die im Folgenden als axiale Richtung A bezeichnet wird. Relative Begriffe wie "oben", "unten", oberhalb", "unterhalb" oder ähnliche beziehen sich immer auf die übliche Gebrauchslage des Grossdieselmotors 1, welche in Fig. 1 dargestellt ist.

In dem Zylinder 2 ist in an sich bekannter Weise ein Kolben 3 vorgesehen der zwischen einem unteren und einem oberen Umkehr- oder Totpunkt hin- und herbewegbar angeordnet ist. Der Zylinder 2 weist ferner einen sich in axialer Richtung A erstreckenden Zylinderliner 4 auf, dessen innenliegende Begrenzungsfläche eine Lauffläche 41 bildet, welche den Kolben 3 bei seiner Bewegung führt. Ferner ist ein Zylinderdeckel 5 vorgesehen, welcher den Zylinder 2 am oberen Ende abschliesst. Der Zylinderdeckel 5 und der Kolben 3 begrenzen einen Brennraum 6, in welchen ein Brennstoff mittels einer nicht dargestellten Einspritzvorrichtung einbringbar ist. Das Einbringen des Brennstoffs erfolgt typischerweise, wenn sich der Kolben 3 im Bereich seines oberen Umkehrpunktes befindet.

Der Kolben 3 weist mindestens einen, häufig aber mehrere Kolbenringe auf, von denen derjenige, welcher dem Brennraum 6 am nächsten liegt, als oberster Kolbenring 31 bezeichnet wird. Falls am Kolben 3 nur genau ein Kolbenring vorgesehen ist, so ist dieser natürlich der oberste Kolbenring 31. Während des Betriebs des Grossdieselmotors 1 gleiten die Kolbenringe, also auch der oberste Kolbenring 31, entlang der Lauffläche 41 auf und ab. Ihre primäre Funktion ist, wie hinlänglich bekannt, das Abdichten des Brennraums 6, so dass die bei der Verbrennung des Brennstoffs entstehende Energie möglichst optimal in Bewegungsenergie des Kolbens 3 umgesetzt wird.

Der Kolben 3 ist in an sich bekannter Weise über eine Kolbenstange 7 mit einem Kreuzkopf 8 verbunden, welcher wiederum über eine Schubstange 9 mit einer nicht dargestellten Kurbelwelle verbunden ist. Wie dies für einen längsgespülten Grossdieselmotor 1 üblich ist, weist der Zylinderliner 4 in seinem unteren Bereich Spülluftschlitze 42 auf, durch welche dem Zylinder Spülluft zuführbar ist, die auch als Ladeluft bezeichnet wird.

Im Betriebszustand wird der flüssige Brennstoff in der Regel dann in den Brennraum 6 eingespritzt, wenn der Kolben 3 kurz vor dem Erreichen seines oberen Umkehrpunktes ist. Der Brennstoff entzündet sich und durch den beim Verbrennungsprozess entstehenden Druck wird der Kolben 3 nach unten beschleunigt. Während der Abwärtsbewegung wird ein nicht näher dargestelltes, üblicherweise zentral im Zylinderdeckel 5 angeordnetes Auslassventil geöffnet, durch welche die Verbrennungsgase aus dem Brennraum 6 in ein Abgassystem 10 entweichen können.

Wenn der Kolben 3 bei seiner Abwärtsbewegung die Spülluftschlitze 42 passiert öffnet er dadurch eine Strömungsverbindung, sodass frische Ladeluft in den Zylinder 2 bzw. in den Brennraum 6 gelangen kann. Bei der anschliessenden Aufwärtsbewegung des Kolbens 3, passiert dieser wieder die Spülluftschlitze 42 und schliesst somit die Strömungsverbindung zum Brennraum 6 sodass keine weitere Ladeluft mehr durch die Spülluftschlitze 42 in den Brennraum 6 strömen kann. Bei der weiteren Aufwärtsbewegung des Kolbens 3 wird dann das Auslassventil verschlossen, sodass anschliessend die Luft im Zylinder 2 komprimiert wird. Kurz bevor der Kolben 3 seinen oberen Umkehrpunkt erreicht, wird wieder Brennstoff in den Brennraum 6 eingespritzt, womit der nächste Zyklus beginnt.

Erfindungsgemäss ist der Zylinderliner 4 zumindest unterhalb der oberen Umkehrposition O des obersten Kolbenrings 31 frei von Kühlmittelbohrungen. Mit der oberen Umkehrposition O des obersten Kolbenrings 31 ist dabei die Position bzw. die Höhe in axialer Richtung A gemeint, an welcher sich die Oberkante - also die dem Brennraum 6 am nächsten liegende Kante - des obersten Kolbenrings 31 befindet, wenn sich der Kolben 3 in seinem oberen Umkehrpunkt befindet.

Besonders bevorzugt ist der Zylinderliner 4 unterhalb der oberen Umkehrposition O des obersten Kolbenrings 31 nur durch die Luft gekühlt welche den Zylinderliner 4 umgibt. Dort sind also insbesondere auch keine Kühlmäntel oder andere Vorrichtungen vorgesehen, welche dem Zylinderliner 4 mittels eines flüssigen Mediums, beispielsweise Wasser, Wärme entziehen oder einen Wärmeaustausch zwischen dem Zylinderliner 4 und einem flüssigen Medium ermöglichen. Der Zylinderliner 4 kann also unterhalb der oberen Umkehrposition O nur an die ihn umgebende Luft Wärme abgeben, beispielsweise durch Strahlung.

Wie dies bei der Ausgestaltung nach Fig. 1 gezeigt ist, endet der Zylinderliner 4 bezüglich der axialen Richtung A gerade unterhalb des Brennraums 6 wenn sich der Kolben 3 in seinem oberen Umkehrpunkt befindet. Wenn der Brennraum 6 maximal komprimiert ist, wird er also nur vom Zylinderdeckel 5 und vom Kolben 3 begrenzt, nicht aber vom Zylinderliner 4. Besonders bevorzugt erstreckt sich der Zylinderliner 4 bezüglich der axialen Richtung bis an ein oberes Ende, wobei dieses obere Ende bezüglich der axialen Richtung A mit der oberen Umkehrposition O des obersten Kolbenrings 31 übereinstimmt. Bei dieser Ausgestaltung ist der Zylinderliner 4 vollkommen frei von Kühlmittelbohrungen und von anderen Vorrichtungen für den Wärmeaustausch, wie beispielsweise einem Kühlmantel. Da der Zylinderliner 4 auch unterhalb bzw. an der unteren Begrenzungsfläche des maximal komprimierten Brennraums 6 endet und somit dem Verbrennungsprozess im Brennraum 6 nicht mehr direkt ausgesetzt ist, hat der Zylinderliner 4 bei dieser Ausführungsform an seinem oberen Ende keinen Kragenbereich mehr, der eine grössere Wandstärke aufweist als der Rest des Zylinderliners. Der Zylinderliner 4 hat somit nur noch die Funktion, den Kolben 3 zu führen und als Gegenlaufpartner für die Kolbenringe zur Dichtung beizutragen, er dient aber nicht mehr der Begrenzung des Brennraums 6 während des Verbrennungsprozesses. Der Zylinderliner 4 ist somit im Wesentlichen eine Führungs- und Dichtungsröhre für den Kolben.

Ein wesentlicher Aspekt ist dabei die Erkenntnis, dass es möglich ist, den Zylinderliner 4 unterhalb der oberen Umkehrposition O des obersten Kolbenrings 31 bzw. in der Ausführungsform gemäss Fig. 1 den gesamten Zylinderliner 4, nur mittels Luft zu kühlen, ohne dass es dadurch zu thermischen Schädigungen des Zylinderliners 4 kommt.

Der Verzicht auf flüssige Kühlmittel, beispielsweise Wasser, im Bereich unterhalb der oberen Umkehrposition des obersten Kolbenrings 31 hat im allgemeinen während des Betriebs eine Erhöhung der Temperatur der Lauffläche 41 im Vergleich zu konventionellen Kühlkonzepten zur Folge. Durch diese erhöhte Laufflächentemperatur lässt es sich wirkungsvoll vermeiden, dass auf der Lauffläche 41 der Taupunkt von Wasser, von schwefliger Säure oder anderen aggressiven Flüssigkeiten unterschritten wird.

Der Zylinderliner 4 zeichnet sich durch eine im Vergleich zu bekannten Zylinderlinern besonders einfache Ausgestaltung aus und ist deutlich einfacher und kostengünstiger herzustellen. Durch den Verzicht auf eine Kühlung mit flüssigen Medien wie Wasser unterhalb der Umkehrposition O des obersten Kolbenrings 31 wird insgesamt erheblich weniger flüssiges Kühlmedium für den gesamten Grossdieselmotor benötigt, d.h. es muss deutlich weniger flüssiges Kühlmedium zirkuliert werden, wodurch sich der Energieverbrauch der Kühlmittelpumpen senkt. Je nach Anwendungsfall ist es auch möglich, dass die Anzahl der Kühlmittelpumpen gesenkt werden kann, was die Kosten noch weiter reduziert. Insgesamt resultiert somit eine bessere Energieeffizienz des gesamten Motors. Durch die höhere Betriebstemperatur der Lauffläche 41 insbesondere im Bereich des oberen Umkehrpunkts des Kolbens 3 lässt sich das Korrosionsrisiko deutlich senken, weil eine Taupunktunterschreitung effizient vermeiden lässt. Somit sinkt auch der Bedarf bzw. der Verbrauch an Schmiermitteln mit hoher BN (Base Number). Die BN ist ein Mass für die Fähigkeit eines Schmiermittels, Säuren wie beispielsweise schwefelige Säure zu neutralisieren. Schmiermittel mit einer hohen BN, die üblicherweise bei stark schwefelhaltigen Brennstoffen, wie z. B. Schweröl, verwendet werden müssen, sind in der Regel teure Substanzen, sodass eine Senkung des Bedarfs zu einer merklichen Kostenreduktion führt.

Da bei der in Fig. 1 gezeigten Ausführungsform der Zylinderliner 4 bezüglich der axialen Richtung A bereits an der oberen Umkehrposition O des obersten Kolbenrings 31 endet, erstreckt sich der Zylinderdeckel 5 bezüglich der axialen Richtung weiter nach unten als bei konventionellen Zylindern in Zweitakt-Grossdieselmotoren, nämlich bis an das obere Ende des Zylinderliners 4. Durch diese Massnahme wird der Brennraum 6 während des Verbrennungsprozesses im Wesentlichen nur von dem Kolben 3 und dem Zylinderdeckel 5 begrenzt. Es versteht sich, dass der Zylinderdeckel 5 während des Betriebs des Grossdieselmotors 1 aktiv gekühlt wird, entweder mit einem flüssigen Kühlmedium, insbesondere Wasser, oder mittels Luft, welche durch Kühlbohrungen im Zylinderdeckel 5 zirkuliert wird, oder durch ein kombiniertes Kühlsystem, dass eine Kühlung mit einem flüssigen Kühlmedium, insbesondere Wasser, und eine Kühlung mit Luft umfasst.

Dazu können oberhalb der oberen Umkehrposition O des obersten Kolbenrings Kühlmittelleitungen für ein fluides Kühlmedium vorgesehen sein, die beispielsweise einen Kühlmantel bilden. Insbesondere können oberhalb der oberen Umkehrposition O des obersten Kolbenrings 31 Kühlmittelleitungen für ein flüssiges Kühlmedium vorgesehen sein, die bevorzugt als Bohrungen ausgestaltet sind, durch welche das Kühlmittel zirkuliert wird.

Insgesamt ist in dem Zylinder 2 also ein zweiteiliges Kühlkonzept realisiert: Unterhalb der oberen Umkehrposition O des obersten Kolbenrings 31 ist eine reine Luftkühlung des Zylinderliners 4 vorgesehen, in dem Sinne, dass der Zylinderliner 4 dort nur durch die ihn umgebende Luft gekühlt und insbesondere frei von Kühlmittel- bzw. Kühlluftbohrungen ist. Oberhalb der oberen Umkehrposition O des obersten Kolbenrings 31 ist eine aktive Kühlung vorgesehen, in dem Sinne, dass hier aktiv Wärme abgeführt wird, entweder durch ein flüssiges Kühlmittel wie Wasser oder durch Luft, beispielsweise Druckluft oder ein von einem Gebläse generierter Luftstrom, die/der durch Kühlbohrungen geleitet werden oder den Zylinder 2 insbesondere den Zylinderdeckel 5 beaufschlagen.

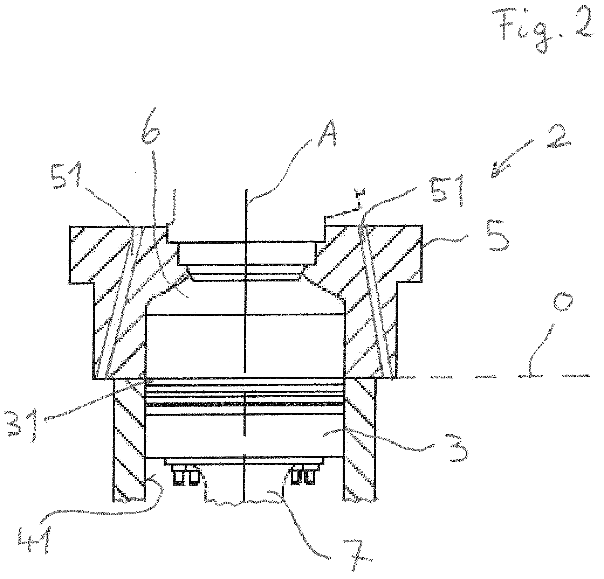

In Fig. 2 ist ein Längsschnitt durch den oberen Bereich einer Variante des ersten Ausführungsbeispiels des Zylinders 2 dargestellt. Bei dieser Variante sind im Zylinderdeckel 5 mehrere Kühlmittelleitungen 51 vorgesehen, die jeweils als Bohrung im Zylinderdeckel 5 ausgestaltet sind und durch welche ein fluides Kühlmedium, vorzugsweise ein flüssiges Kühlmedium und insbesondere Wasser geführt werden kann, um dem Zylinderdeckel Wärme zu entziehen. Das Kühlmedium kann beispielsweise mittels einer nicht dargestellten Pumpe durch die Kühlmittelleitungen 51 gefördert werden.

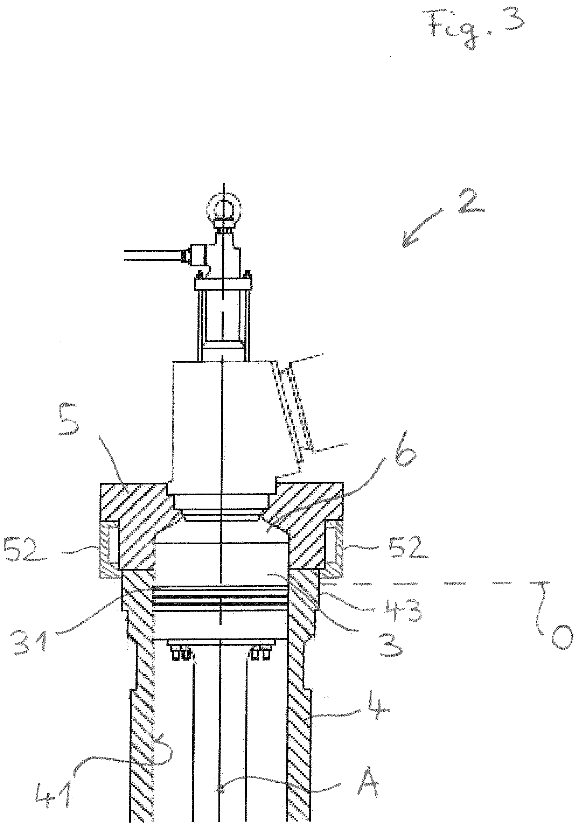

In Fig. 3 ist ein Längsschnitt durch ein zweites Ausführungsbeispiel eines erfindungsgemässen Zylinders 2 dargestellt. Im Folgenden wird nur auf die Unterschiede zum ersten Ausführungsbeispiel eingegangen. Die Erläuterungen bezüglich des ersten Ausführungsbeispiels gelten in sinngemäss gleicher Weise auch für das zweite Ausführungsbeispiel.

Bei dem zweiten Ausführungsbeispiel erstreckt sich der Zylinderliner 4 in axialer Richtung A so weit, dass das obere Ende des Zylinderliners 4 oberhalb der oberen Umkehrposition O des obersten Kolbenrings 31 liegt. Das obere Ende liegt unterhalb des Brennraums 6, wenn dieser sein minimales Volumen (maximale Kompression) hat. Zudem ist hier eine Variante gezeigt, bei welcher der Zylinderliner 4 im Bereich seines oberen Endes einen Kragenbereich 43 aufweist, in welchem die Wandstärke des Zylinderliners 4 grösser ist, als in seinem unteren Bereich. Natürlich ist es auch möglich dass sich der Kragenbereich 43 oder der Zylinderliner 4 in axialer Richtung A so weit nach oben erstreckt, dass er eine Begrenzung des Brennraums 6 bildet, wenn sich der Kolben 3 im oberen Umkehrpunkt befindet, der Brennraum 6 also minimales Volumen hat. Auch bei diesem zweiten Ausführungsbeispiel ist der Zylinderliner 4 unterhalb der oberen Umkehrposition O des obersten Kolbenrings 31 nur durch die ihn umgebende Luft gekühlt. Oberhalb der oberen Umkehrposition O können zusätzliche Kühlmassnahmen, beispielsweise eine Wasserkühlung, vorgesehen sein, sowohl am oder im Zylinderliner 4 als auch am oder im Zylinderdeckel 5. Wie dies Fig 3 zeigt, ist im zweiten Ausführungsbeispiel ein im wesentlichen ringförmiger Kühlmantel 52 vorgesehen, der die äussere Umfangsfläche des Zylinderdeckels 5 umschliesst und auch mit dem oberen Ende des Zylinderliners 4 in Kontakt steht. Durch diesen Kühlmantel wird in an sich bekannter Weise ein fluides Kühlmittel, vorzugsweise Wasser, gefördert, um dem Zylinderdeckel 5 bzw. dem oberen Ende des Zylinderliners 4 Wärme zu entziehen. Es versteht sich, dass auch bei diesem zweiten Ausführungsbeispiel zusätzlich oder alternativ Kühlmittelleitungen z.B. in Form von Bohrungen im Zylinderdeckel 5 und/oder im Bereich des Zylinderliners oberhalb der oberen Umkehrposition O des obersten Kolbenrings 31 vorgesehen sein können.

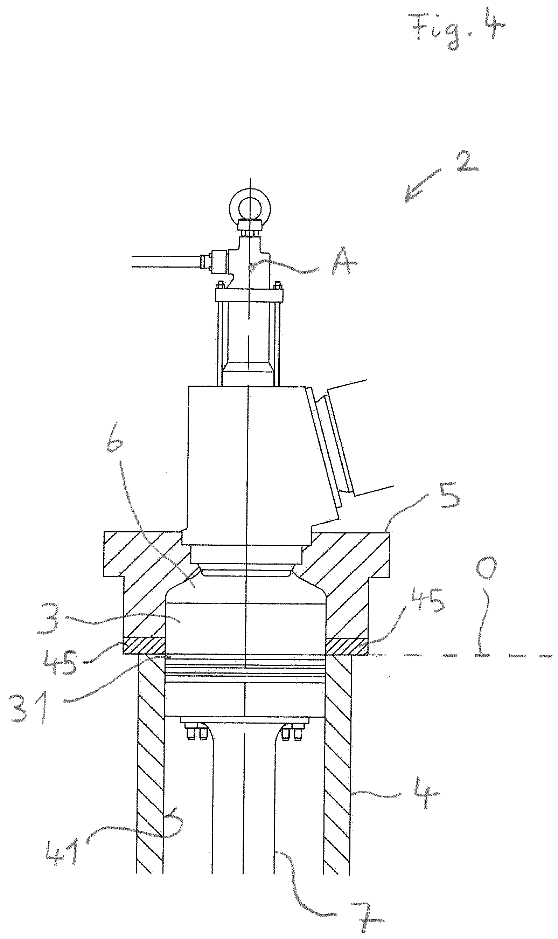

In Fig. 4 ist ein Längsschnitt durch ein drittes Ausführungsbeispiel eines erfindungsgemässen Zylinders 2 dargestellt. Im Folgenden wird nur auf die Unterschiede zum ersten und zweiten Ausführungsbeispiel eingegangen. Die Erläuterungen bezüglich des ersten und zweiten Ausführungsbeispiels gelten in sinngemäss gleicher Weise auch für das dritte Ausführungsbeispiel.

Bei dem dritten Ausführungsbeispiel liegt - wie bei dem ersten Ausführungsbeispiel - das obere Ende des Zylinderliners 4 bezüglich der axialen Richtung A auf der gleichen Position wie die obere Umkehrposition O des obersten Kolbenrings 31. Bei dem dritten Ausführungsbeispiel ist zusätzlich zwischen dem oberen Ende des Zylinderliners 4 und dem Zylinderdeckel 5 ein rohrförmiges Zwischenstück 45 vorgesehen, welches aus einem anderen Material gefertigt ist als der Zylinderliner 4. Der Zylinderliner 4 ist üblicherweise aus einer Graugusslegierung gefertigt. Da die meisten Graugusslegierungen aufgrund ihrer Wärmebeständigkeit nicht dauerhaft über etwa 300°C erhitzt werden sollten, kann es je nach Anwendungsfall vorteilhaft sein, im Bereich oberhalb der oberen Umkehrposition O des obersten Kolbenrings 31 das Zwischenstück 45 vorzusehen, weil in diesem Bereich der grösste Wärmeeintrag durch den Verbrennungsprozess im Brennraum 6 erfolgt und dieser Bereich bezogen auf den Zylinderliner 4 den höchsten Temperaturen ausgesetzt ist.

Es versteht sich, dass dieses Zwischenstück 45 vorzugsweise aus einem Material gefertigt ist, welches eine höhere Wärmebeständigkeit aufweist, als das Material aus dem der Zylinderliner 4 gefertigt ist. Für Zylinderliner 4 aus Grauguss eignen sich beispielsweise ein niedrig legierter Stahl oder Stahlguss für das Zwischenstück 45. Andere geeignete Werkstoffe für das Zwischenstück 45 sind die Werkstoffe, aus denen der Zylinderdeckel 5 gefertigt wird, z. B. 16 CrMo 44 oder GS15Mo3 Natürlich können auch bei dem dritten Ausführungsbeispiel Kühlmittelleitungen z.B. in Form von Bohrungen im Zylinderdeckel 5 und/oder im Bereich des Zylinderliners oberhalb der oberen Umkehrposition O des obersten Kolbenrings 31 vorgesehen sein oder Kühlmäntel.

Das Zwischenstück 45 kann aber auch aus dem gleichen Material gefertigt werden wie der Zylinderliner 4, also beispielsweise aus einer Graugusslegierung. Dabei ist es bevorzugt wenn das Zwischenstück aktiv gekühlt wird.

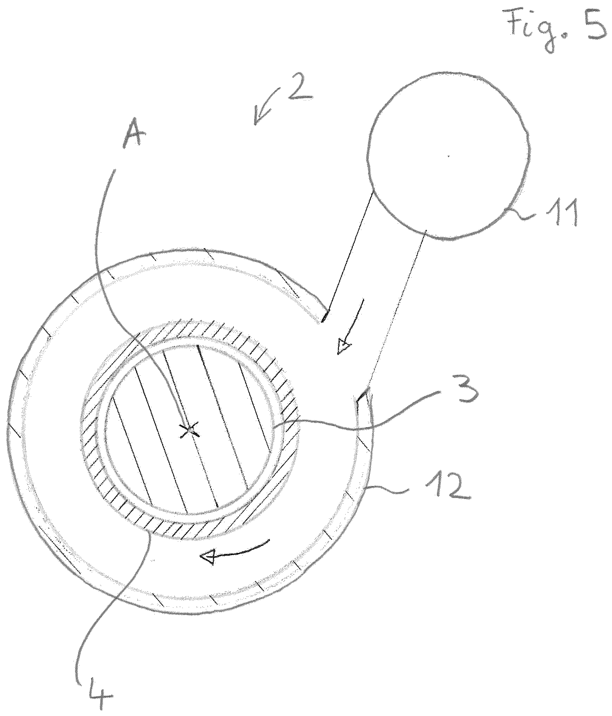

Fig. 5 zeigt einen Querschnitt senkrecht zur axialen Richtung durch den oberen Bereich einer Variante für die Ausgestaltung eines erfindungsgemässen Zylinders 2, die in Verbindung mit allen Ausführungsbeispielen vorgesehen werden kann. Gemäss dieser Variante wird dem Zwischenstück 45 und/oder dem oberen Endbereich des Zylinderliners 4, also denjenigen Bereichen, die den höchsten Temperaturen ausgesetzt sind, mit einem Gebläse 11 Luft zum Kühlen zugeführt. Dabei kann es vorteilhaft sein, ein rohrförmiges Element 12 vorzusehen welches zumindest den oberen Bereich des Zylinderliners 4 und/oder das Zwischenstück 45 umgibt und in welches die Luft von dem Gebläse 11 eingeblasen wird, so wie dies die Pfeile ohne Bezugszeichen in Fig. 5 andeuten. Das Gebläse 11 kann dabei sowohl ein zusätzliches Gebläse 11 sein, als auch ein Gebläse 11, das sowieso in dem Motorenraum vorgesehen ist, in welchem sich der Grossdieselmotor 1 befindet. Solche Gebläse werden üblicherweise im Bereich der Grossdieselmotoren 1 verwendet, um dem Motorenraum, in welchem sich der Grossdieselmotor befindet, Frischluft zuzuführen. Diese Massnahme ist insbesondere deshalb üblicherweise notwendig, damit das Ansaugen von Luft durch den oder die Turbolader nicht zu einem Unterdruck im Motorenraum führt. Beispielsweise kann ein Teil der von solchen Gebläsen 11 geförderten Luft zum Einleiten in das rohrförmige Element 12 verwendet werden.

Andererseits kann es auch vorteilhaft sein, kühlere Bereiche des Zylinderliners 4 gezielt gegen den Luftstrom von solchen vorhandenen Gebläsen abzuschirmen, um zu verhindern, dass in diesen Bereichen durch die Beaufschlagung mit einem kühlenden Luftstrom die Lauffläche 41 zu kühl wird und insbesondere zu verhindern, dass die Laufflächentemperatur den Taupunkt von Wasser oder schwefelhaltigen Säuren unterschreitet. Dazu können Abschirmungen an geeigneten Stellen des Grossdieselmotors oder auch an den Gebläsen vorgesehen sein.

Insbesondere ermöglicht es die erfindungsgemässe Ausgestaltung, dass die obere Umkehrposition O des obersten Kolbenrings 31 in Abhängigkeit von der Betriebstemperatur der Lauffläche 41 des Zylinderliners gewählt wird. Mit der Betriebstemperatur ist dabei diejenige Temperatur gemeint, welche beim Volllastbetrieb des Grossdieselmotors 1 herrscht. Das heisst, man ordnet den obersten Kolbenring 31 bezüglich der axialen Richtung A derart an, dass seine obere Umkehrposition O in einem Bereich der Lauffläche 41 liegt, deren Betriebstemperatur in einem vorgebbaren Temperaturbereich liegt. In einer bevorzugten Ausgestaltung ist dieser Temperaturbereich 250°C bis 350°C, insbesondere 280°C bis 330°C. Die obere Umkehrposition O des obersten Kolbenrings 31 wird also nicht mehr wie bisher allgemein üblich in Prozenten des Hubs des Kolbens 3 (Abstand zwischen oberem und unterem Umkehrpunkt) festgelegt, sondern wird in Abhängigkeit von der Temperatur festgelegt, die in dem Bereich benötigt wird, wo sich der oberste Kolbenring 31 befindet, wenn der Kolben 3 in seinem oberen Umkehrpunkt ist.

Durch diese Anpassung der Kolbenringposition an die Betriebstemperatur der Lauffläche 41 ist es auch möglich, die Anzahl der Kolbenringe zu reduzieren. Dabei sind Ausgestaltungen mit zwei oder auch nur mit einem Kolbenring möglich. Durch die Reduzierung der Anzahl der Kolbenringe resultiert ferner der Vorteil, dass der Kolben 3 mit einer geringeren Höhe gebaut werden kann als es üblich ist. Mit der Höhe des Kolbens 3 ist dabei seine Erstreckung in axialer Richtung A gemeint.

Der erfindungsgemässe längsgespülte Zweitakt-Grossdieselmotor 1 kann insbesondere auch als Dual-Fuel Motor zur Verbrennung eines Gases und zur Verbrennung eines flüssigen Brennstoffs, insbesondere Diesel oder Schweröl ausgestaltet sein.

Für das Einbringen des flüssigen Brennstoffs sind ein oder mehrere Brennstoffeinspritzdüsen vorgesehen (nicht dargestellt), die beispielsweise im Zylinderkopf in der Nähe des Auslassventils angeordnet sind. Für die Gaszuführung im Gasmodus ist ein Gaszuführsystem vorgesehen (nicht dargestellt), das mindestens ein Gaseinlassventil mit einer Gaseinlassdüse umfasst. Die Gaseinlassdüse ist typischerweise in der Wandung des Zylinders vorgesehen, beispielsweise auf einer Höhe, die etwa in der Mitte zwischen dem oberen und dem unteren Totpunkt des Kolbens liegt.

Bezüglich des Einbringens des Gases in den Brennraum des Zylinders, während des Gasmodus, gibt es mehrere bevorzugte Varianten. Wie bereits voranstehend erwähnt, kann ein Gaszuführsystem mit mindestens einer Gaseinlassdüse vorgesehen sein, welche im Zylinderliner angeordnet ist, sodass das Gas in den Zylinder einbringbar ist und sich dort mit der Spülluft zu dem zündfähigen Luft-Gas Gemisch vermischt.

## Patentansprüche

1. Zylinder für einen längsgespülten Zweitakt-Grossdieselmotor mit einem Kolben (3), der zwischen einem unteren und einem oberen Umkehrpunkt hin- und herbewegbar angeordnet ist, wobei der Kolben (3) zumindest einen obersten Kolbenring (31) aufweist, mit einem Zylinderliner (4) zur Führung des Kolbens (3), wobei der Zylinderliner (4) eine Lauffläche (41) aufweist, entlang welcher der oberste Kolbenring (3) des Kolbens im Betriebszustand gleitet, sowie mit einem Zylinderdeckel (5), wobei der Zylinderdeckel (5) und der Kolben (3) einen Brennraum (6) für einen Brennstoff begrenzen, **dadurch gekennzeichnet, dass** der Zylinderliner (4) unterhalb einer oberen Umkehrposition (O) des obersten Kolbenrings frei von Kühlmittelbohrungen ist.

2. Zylinder nach Anspruch 1, wobei der Zylinderliner (4) unterhalb der oberen Umkehrposition (O) des obersten Kolbenrings (31) nur durch den Zylinderliner (4) umgebende Luft kühlbar ist.

3. Zylinder nach einem der vorangehenden Ansprüche, bei welchem der Zylinderliner (4) bezüglich einer durch die Zylinderachse festgelegten axialen Richtung (A) unterhalb des Brennraums (6) endet.

4. Zylinder nach einem der vorangehenden Ansprüche, bei welchem sich der Zylinderliner (4) bezüglich der axialen Richtung (A) bis an ein oberes Ende erstreckt, wobei das obere Ende bezüglich der axialen Richtung (A) mit der oberen Umkehrposition (O) des obersten Kolbenrings (31) übereinstimmt.

5. Zylinder nach einem der vorangehenden Ansprüche, bei welchem der Zylinderliner (4) einen Kragenbereich (43) aufweist.

6. Zylinder nach einem der vorangehenden Ansprüche, bei welchem zwischen dem oberen Ende des Zylinderliners (4) und dem Zylinderdeckel (5) ein rohrförmiges Zwischenstück (45) vorgesehen ist, welches aus einem anderen Material gefertigt ist als der Zylinderliner (4).

7. Zylinder nach einem der vorangehenden Ansprüche, bei welchem der oberste Kolbenring (31) bezüglich der axialen Richtung (A) derart angeordnet ist, dass seine obere Umkehrposition (O) in einem Bereich des Zylinderliners (4) liegt, deren Betriebstemperatur in einem vorgebbaren Temperaturbereich liegt, welcher vorzugsweise 250°C bis 350°C beträgt.

8. Zylinder nach einem der vorangehenden Ansprüche, wobei oberhalb der oberen Umkehrposition (O) des obersten Kolbenrings (31) Kühlmittelleitungen (51, 52) für ein fluides Kühlmedium vorgesehen sind.

9. Zylinder nach einem der vorangehenden Ansprüche, wobei oberhalb der oberen Umkehrposition (O) des obersten Kolbenrings (31) Kühlmittelleitungen (51, 52) für ein flüssiges Kühlmedium, vorzugsweise Wasser, vorgesehen sind.

10. Zylinder nach Anspruch 8 oder 9, wobei die Kühlmittelleitungen (51, 52) Kühlmittelbohrungen (51) umfassen, welche im Zylinderdeckel (5) oder im Zylinderliner (4) vorgesehen sind.

11. Längsgespülter Zweitakt-Grossdieselmotor mit einem Zylinder (2), der nach einem der vorangehenden Ansprüche ausgestaltet ist.

12. Grossdieselmotor nach Anspruch 11 mit einem Gebläse (11), mit welchem dem Zylinderliner (4) im Bereich der oberen Umkehrposition (O) des obersten Kolbenrings (31) Kühlluft zuführbar ist.

13. Grossdieselmotor nach einem der Ansprüche 11 oder 12, bei welchem eine Abschirmung vorgesehen ist, mit welcher der Zylinderliner (4) gegen Luftströmungen abschirmbar ist.

14. Grossdieselmotor nach einem der Ansprüche 11-12, bei welchem der Zylinderliner zumindest teilweise von einem rohrförmigen Element (12) umgeben ist, in welches Kühlluft einbringbar ist.

15. Grossdieselmotor nach einem der Ansprüche 11-14, welcher als Dual-Fuel Motor zur Verbrennung eines Gases und zur Verbrennung eines flüssigen Brennstoffs, insbesondere Diesel oder Schweröl, ausgestaltet ist.
